# EUROPEAN PATENT APPLICATION

(11) **EP 1 455 511 A1**
(43) Date of publication of application: **08.09.2004**
(21) Application number: 03004746.8
(22) Date of filing: 04.03.2003
(51) Int. Cl.: H04M 15/00

(54) **Method and apparatus means for charging a telephone call by undertaking charging fees by a not involved third party**

(71) Applicant: SIEMENS AKTIENGESELLSCHAFT, 80333 München (DE)
(72) Inventor: Van den Berghe, Rik, 8470 Gistel (BE); Vanderzeypen, Jan, 2235 Hulshout (BE)

(57) **Abstract**

The present invention comprises a method and apparatus means for charging a telephone call. A telephone call is initiated by the calling trusted communication device 1 to any called communication device 5 to 8. Then the server or switching system containing the database 3 verifies if the trusted communication device 1 is authorized that a third party, trustee device 2, undertakes charging fees related to said call. The third party has a charging account and is normally not involved in said call. If the trusted device 1 is authorized and when the call is released, the server or switching system transfers the amount of the call charging fees to the charging account of the third party.

## Description

The present invention relates to a method and apparatus means for charging a telephone call (e.g. switched or Voice over IP calls) established between at least two parties within a telecommunication network.

### BACKROUND OF INVENTION

This invention is used in the telecommunications field. Telecommunication Operators have implemented Charging possibilities for all kind of end customers, e.g. Prepaid Charging contracts, fixed contracts with periodic bills, etc. For the prepaid contracts, different alternatives are already available to release prepaid charges, e.g. buying calling cards, loading via bank terminals etc.

However one extra aspect has never been considered, namely there are no means to enable an end customer to use the telecommunication means of the operator and the corresponding charges being charged to a third party (from now on called the Trustee) willing to accept these charges.

### SUMMARY OF INVENTION

The present invention aims to improve known methods and apparatus means for charging telephone calls.

Said problem is solved by the features mentioned in the independent claims. Preferred embodiments of the invention are described in the dependant claims.

A main aspect of the invention is to charge call fees to a third party having a charging account and not being involved to the charged call. This invention does not only focus on third party charging but also on the following extra enhancement which provide full flexibility and attractiveness:

End customer subjected to third party charging (i.e. being able to use Telecommunication means without being charged for it) are accorded a trust list containing the identification of the destinations that are subjected to this third party charging.
- Subdivided trust list for all offered telecommunication means (e.g. normal calls, SMS, ...)
- The trust list can be maintained either by the Operator or by the trustee e.g. by web based application.
- The trust list can contain either full/definite identification or wildcard entries which are related to several destinations.
- Each trust list entry can contain several activation / deactivation events or trigger points such as time of day, day of week, budget limits etc.

The trust list can be maintained by a Trustee. The resulting telecommunication costs of an activity that matches an entry (and its additional trigger parameters) are not longer charged to the calling party but to the trustee, which has contracted the enhanced charging feature with the calling party's operator.

The proposed invention provides the following advantages:
- From an operators point of view:
   Additional revenues from successful telecommunication actions.
   New attractive subscriber feature for the Operator, attracting new customers.
- From an end customers point of view (the trusted party): Security that certain destinations can always be reached without having to bother about the corresponding expenses.
- From an end customers point of view (the trustee party):
   Depending of the relation trusted party - trustee (business, family, ...) the advantages may differ slightly. For business relations, the company has complete control of the business telecommunication charges. For family relations the trustee has the security that the trusted party is always able to use his/her communication means.

### BRIEF DESCRIPTION OF THE DRAWINGS

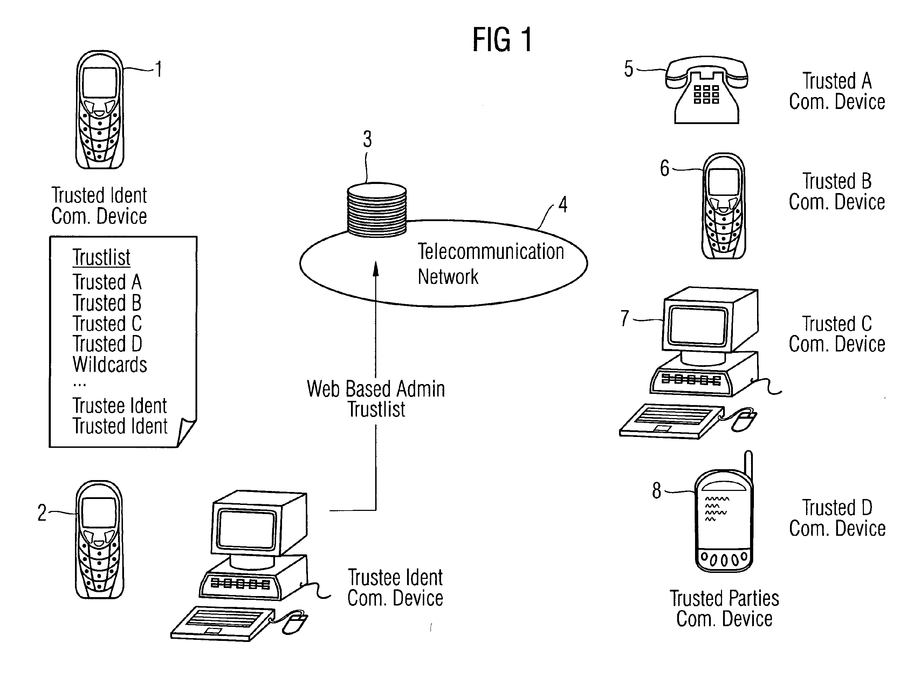

Preferred embodiments of the present invention will now be described with reference to the accompanying drawing in which:

The Figure is a schematic diagram of a part of a telecommunication network in which the present invention can be used.

### DETAILLED DESCRIPTION OF THE DRAWINGS

The Figure generally depicts a telecommunication network 4 comprising maybe two or more different types of networks, e.g. a fixed telephone switching network and a mobile radio network respectively and a packet based network (IP-Network) respectively. The telecommunication network preferably comprises a server ,e.g. a SCP (= service control point) in the environment of intelligent networks, or a switching system which provides a database 3 containing the shown trust list belonging to the above arranged trusted communication device 1. The trust list contains entries "Trustee Ident" relating to the trustee identification and to the trustee's communication device 2 and "Trusted Ident" relating to the trusted communication device 1. Furthermore the trust list includes entries "Trusted A to Trusted D" which are related to the various communication devices 5, 6, 7 and 8 or more devices and it contains possibly wildcard entries. It is possible that each communication device belong to a different telecommunication network, e.g. switched/mobile and packet based network or two switched/mobile networks operated by different operators or providers (e.g. domestic and foreign provider). The entries have the following meaning:
- Trustee Ident: Third party receiving the communication expenses from outgoing communication activities of the Trusted Ident to one of the Trusted parties available in the trust list.
- Trusted Ident: Communication partner setting up outgoing communication.
- Trust List: trust list of the Trusted Ident to be maintained by either the Operator of the Trusted Ident or by the Trustee Ident by means of Web Based or a classical interface.
- Trusted A...D: Parties being trusted by the Trustee for outgoing calls from the Trusted Ident.

### Inter-Operator Subject:

As the Trustee Ident and the Trusted Ident can belong to different operators, it is obvious that the administration of the Trust List is subject of a contract between the operator of the Trusted Ident and the Trustee Ident himself. The Operator of the Trustee Ident or the Trusted Parties (A...D) are not involved in this contract.

### Charging Scenarios:

A telephone call is initiated by the trusted communication device 1 to any communication device 5 to 8. Then the server or switching system containing the database 3 verifies if the trusted communication device 1 is authorized that a third party, trustee device 2, undertakes charging fees related to said call. The third party has a charging account and is normally not involved in said call. If the trusted device 1 is authorized and when the call is released, the server or switching system transfers the amount of the call charging fees to the charging account of the third party.

It is obvious that the way this feature can be provided is strongly related to the charging scenario that is being used by the Operator of the Trusted Ident.

In case charging is implemented by Post processing means based on Call Detail Records (according to ITU-T Q825) generated at call release, only the charging for the Trusted Ident must be suppressed and the Charging Post processing can gather all necessary CDRs in order to provide the bill for the Trustee Ident.

The following applications of the invention are imaginable:
- Business Customers:
   I.e. Companies offering communication contracts to their employees for their professional telecommunication costs.
   Technical Problem:
   Time-consuming job filtering private calls from business calls in order to split the business charges (paid for by the company) from the private charges (to be paid for by the end customer).
   Solution:
   The company subscribes to the enhanced business charging Feature of the employees operator and it is herewith enabled to administrate the trust list of the employee.
   Finally the communication costs are provided to the company.
- Parents with adolescents kids:
   I.e. Kids having a mobile phone of their own with prepaid card
   Technical Problem:
   It often happens that the prepaid charges ran flat the moment an urgent call has to be setup (calling home, school, doctor, etc.)
   Solution:
   Parents subscribe to the enhanced buddy charging Feature of the children's Operator and they are herewith enabled to administrate the trust list of the son / daughter.
   Finally the communication costs are provided to the parents.
- Persons living abroad, supporting their families at home I.e. persons living abroad and financially supporting relatives, friends or other persons in a foreign country.
   This scenario is particularly applicable for the African and Asian market.
   Technical Problem:
   In some countries it often happens that children who studied abroad continue living and working abroad after finishing their studies. In the meantime they financially support their folks at home.
   Solution:
   Person living abroad subscribes to the enhanced buddy charging Feature of the operator providing
   Telecommunication means for the trusted party and herewith the Trustee is enabled to administrate the corresponding Trust List. Finally the communication costs are provided to the Trustee.

The latter application scenario could also be used for people who look after or help to bring up children (called foster parents) and give therefore financial support. By using this new feature it becomes possible to take part in their communication costs on a remote bases and in a more direct and controlled way.

## Claims

1. A method of charging a telephone call established between at least two parties within a telecommunication network (4) comprising the steps of:
- initiating a telephone call from an initiating device (1) of a first party to at least one destination device (5,6,7,8) of at least one second party,
- verifying if the first party is authorized to set up said call by undertaking his/her charging fees related to said call by a not involved third party (2) having a charging account,
- in case of authorization setting up said call,
- after releasing said call transferring the amount of said charging fees to the charging account of said third party.

2. A method according to claim 1, wherein a so called trust list comprising an identification of the first party (1), so called trusted party, and an identification of the third party (2), so called trustee party, is provided for verifying the authorization of the first party.

3. A method according to claim 1 or 2, wherein the list further comprises several identification numbers of parties who can be called by the trusted party (1).

4. A method according to claim 3 , wherein the identification numbers are definite or they are related to several destinations.

5. A method according to any one of the previous claims, wherein the authorization is further dependant on the communication service requested by the first party (1).

6. A method according to any one of the claims 2 to 5, wherein the list further contains activation and/or deactivation events, particularly such as time of day, day of week and/or budget limits.

7. A method according to any one of the previous claims, wherein the first party's authorization for charging the charging account of the third party can be maintained by the third party (2).

8. A method according to any one of the previous claims, wherein transferring the amount of said charging fees to the charging account of said third party (2) is based on so called Call Detail Records.

9. A method according to any one of the previous claims, wherein said first party (1) and said at least second (5,6,7,8) parties belong to different telecommunication network (4) as said third party (2).

10. A database (3) within a telecommunication network (4) which is suitable for using the method according to any one of the previous claims, wherein the database provides means for storing said trust list.

11. A server within a telecommunication network (4) which is suitable for using the method according to any one of the claims 1 to 9, wherein the server comprises means for providing a database as claimed in claim 9.

12. A server according to claim 10, wherein the server represents a service control point (SCP) of an intelligent network architecture.

13. A switching system within a telecommunication network (4) which is suitable for using the method according to any one of the claims 1 to 9, wherein the switching system provides a trust list as claimed in claim 2.
